# EUROPÄISCHE PATENTANMELDUNG

(11) **EP 1 297 939 A2**
(43) Veröffentlichungstag der Anmeldung: **02.04.2003**
(21) Anmeldenummer: 02019274.6
(22) Anmeldetag: 28.08.2002
(51) Int. Cl.: B29C 44/04, B29C 44/38, E04C 3/30

(54) **Bauelement und Verfahren zu dessen Herstellung**

(30) Priorität: 28.09.2001 DE 10148269
(71) Anmelder: Krämer, Ulrich, 83075 Au bei Bad Feilnbach (DE)
(72) Erfinder: Krämer, Ulrich, 83075 Au bei Bad Feilnbach (DE)
(74) Vertreter: Gustorf, Gerhard, Dipl.-Ing.

(57) **Zusammenfassung**

Das Bauelement (10) hat einen Sandwichaufbau mit einem Kern (14) aus Hartschaum-Kunststoff und einer diesen umgebenden Außenhaut (16) aus Polymethacrylat. Vorzugsweise besteht der Kern (14) aus PUR-Hartschaum und die Außenhaut (16) aus PMMA.

## Beschreibung

Die Erfindung betrifft ein Bauelement, insbesondere aber nicht ausschließlich eine Säule.

In der modernen Bautechnik werden Säulen oder andere Bauelemente häufig zu Zier- und Dekorationszwecken verwendet, um dem Bauwerk ein an klassische Vorbilder erinnerndes Aussehen zu verleihen. Derartige Bauelemente werden in aller Regel industriell vorgefertigt und können vom Architekten entsprechend den Vorstellungen des Bauherrn ausgewählt und eingesetzt werden. Vor allem an Säulen für diese Anwendungszwecke werden die folgenden Anforderungen gestellt:
- sie sollen robust und widerstandsfähig sein
- sie sollen witterungsbeständig sein
- ihre Außenfläche soll lichtecht sein
- sie sollen leicht und einfach handhabbar sein.

Gegenwärtig sind Säulen zu den genannten Zwecken bekannt, die in einer Form aus Beton gegossen werden, der ggf. auch armiert sein kann. Derartige Bauelemente haben jedoch den Nachteil, daß sie der Förderung nach einem geringen Gewicht nicht gerecht werden. Ähnliches trifft für aus Gips hergestellte Bauelemente zu, die zudem nicht robust genug sind, um mechanischen Einwirkungen von außen Stand zu halten. Ihr hohes Gewicht schließt oftmals die Verwendung in Bauwerken mit zu geringer statischer Belastbarkeit aus, z. B. bei freitragenden Balkonen.

Daneben sind Bauelemente, insbesondere Säulen, bekannt, die aus Kunststoff geblasen, geschleudert oder geschäumt werden. Diese haben den Vorteil eines sehr geringen Gewichtes, was jedoch mit dem Nachteil erkauft wird, daß sie entweder nicht widerstandsfähig gegen mechanische Verletzungen sind oder zu geringe Steifigkeit aufweisen. Hinzu kommt die geringe Beständigkeit gegen Witterungseinflüsse und Lichteinwirkungen.

Der Erfindung liegt die Aufgabe zugrunde, ein Bauelement zur Verfügung zu stellen, das einfach hergestellt werden kann und die oben aufgeführten Eigenschaften der Robustheit, Witterungsbeständigkeit, Lichtechtheit und Leichtigkeit in sich vereinigt.

Gemäß der Erfindung wird diese Aufgabe gelöst durch ein Bauelement mit Sandwichaufbau, bestehend aus einem Kern aus Hartschaum-Kunststoff und einer diesen umgebenden Außenhaut aus Polymethacrylat.

Vorzugsweise besteht dabei der Kern aus Polyurethan-Hartschaum (PUR), während die Außenhaut aus Polymethylmethacrylat (PMMA) besteht.

Bei einem derartigen Bauelement übernimmt die Außenhaut aus Polymethäcrylat die Schutzfunktion hinsichtlich der Beständigkeit gegen Witterungseinflüsse und Lichteinwirkungen sowie die Festigkeit und Robustheit im Außenbereich, während der Kern aus Hartschaum-Kunststoff, insbesondere Polyurethan-Hartschaum, für ein möglichst geringes Gewicht sorgt. Die Festigkeit eines derartigen Bauelementes, insbesondere einer Säule, wird einerseits gewährleistet durch die äußere Schale, andererseits durch den Hartschaum-Kunststoffkern, der im Innenbereich sowohl als Füllelement als auch als Stütze wirkt.

Die Außenhaut kann zusätzlich faserverstärkt sein, beispielsweise durch Glas- oder Kohlefasern. Ferner kann die Außenhaut Füllstoffe enthalten, die die Herstellungskosten reduzieren und ggf. zur Erhöhung der Oberflächenhärte, der Temperaturbeständigkeit und der Druckfestigkeit beitragen. Ferner ist es möglich, der Außenhaut als Füllstoffe Farbpigmente beizumischen, um dem Bauelement die gewünschte Farbgebung zu verleihen.

Eine wirtschaftlich günstige Alternative besteht darin, die Außenhaut anstatt aus PMMA aus Polyesterharz (UP) oder aus lichtbeständigen PUR-Systemen herzustellen. Da Polyesterharzen immer ein Geruch anhaftet, eignet sich diese Variante nur für den Außeneinsatz. PUR-Systeme können hingegen auch für Innenräume vorgesehen werden, da sie keine Geruchsbelästigung darstellen; nachteilig ist allerdings ihre geringere Härte.

Wenn das Bauelement als Säule ausgebildet ist, kann diese so hergestellt werden, daß man in eine rotierende Form zunächst flüssiges PMMA zur Bildung der Außenhaut einbringt und dieses dann aushärten läßt, worauf bei rotierender Form ein PUR-Gemisch eingebracht wird. Das flüssige PMMA kann dabei mittels einer axial verschiebbaren Lanze eingespritzt werden.

Bei einem in dieser Weise hergestellten Schleuderguß mittels axial verschiebbarer Lanze ist es möglich, entsprechend der Fliehkraft die Wandstärke zu regulieren. Nach dem Aushärten folgt die Herstellung des Kernes durch Ausschäumen, wobei in der Mitte ein Lunker entstehen kann, der jedoch für die weitere Verwendung der Säule ohne jeden Nachteil ist. Vielmehr ist es möglich, den mittleren, durch einen Lunker gebildeten Hohlraum als Aufnahme für ein weiteres Bauelement zu verwenden, beispielsweise eine Verbindungsstange.

In Weiterführung dieses Gedankens ist es möglich, die Säule nicht nur als Dekorationselement zu verwenden, sondern auch als Schalung oder Verkleidung für eine tragende Säule, beispielsweise eine armierte Betonsäule.

Die Erfindung ist nachstehend an Ausführungsbeispielen erläutert, die in der Zeichnung dargestellt sind. Es zeigen:
Figur 1 die Ansicht eines als Säule ausgebildeten Bauelementes gemäß der Erfindung,
Figur 2 einen Querschnitt in der Ebene II-II der Figur 1,
Figur 3 einen Längsschnitt durch eine Säule, die als Verkleidung einer tragenden Innensäule verwendet wird,
Figur 4 eine weitere Variante der Figur 3,
Figur 5 die perspektivische Schemadarstellung einer rotierenden Form zur Herstellung einer Säule gemäß der Erfindung,
Figur 6 die perspektivische Darstellung einer dekorativen Säule mit innerem Lunkerhohlraum,
Figur 7 die Ansicht einer weiteren Möglichkeit für ein Bauelement gemäß der Erfindung und
Figur 8 die Draufsicht auf ein anderes Ausführungsbeispiel.

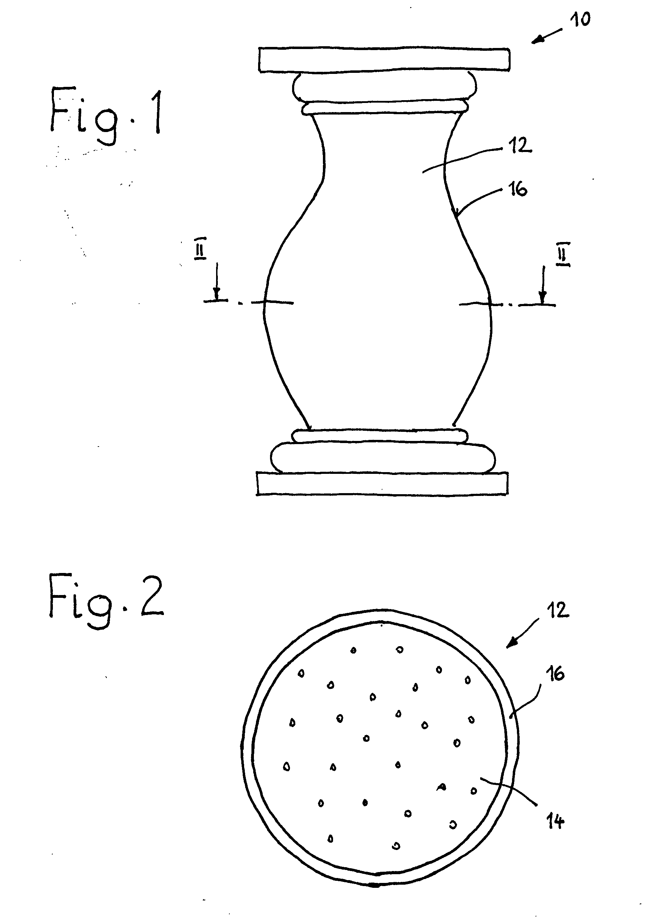

Die Figuren 1 und 2 zeigen ein Bauelement gemäß 10 gemäß der Erfindung, das als Säule 12 ausgebildet ist. Diese hat gemäß Figur 2 einen Sandwichaufbau mit einem Kern 14 aus Polyurethan-Hartschaum (PUR) und einer diesen umgebenden Außenhaut 16 aus Polymethylmethacrylat (PMMA).

Die Außenhaut 16 kann faserverstärkt sein, um die Festigkeit zu erhöhen, und sie kann zusätzlich Füllstoffe aufweisen, die beispielsweise aus Farbpigmenten bestehen oder aus anderen Stoffen, die zur Erhöhung der Oberflächenhärte, der Temperaturbeständigkeit oder der Druckfestigkeit dienen.

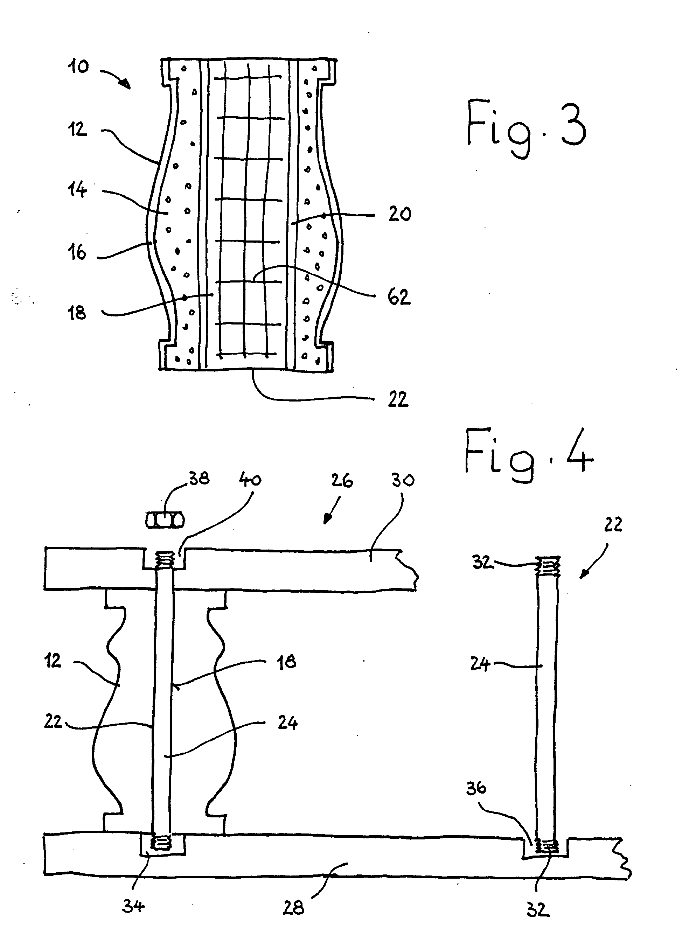

Das Beispiel der Figur 3 zeigt eine Säule 12, die gemäß der Erfindung ebenfalls aus einem PUR-Kern 14 und einer PMMA-Außenhaut 16 besteht. Der Kern 14 hat hier allerdings einen Hohlraum 18, der beispielsweise zylindrisch ist und nach außen durch ein Rohr 20 aus Metall oder Kunststoff begrenzt sein kann. Dieser axial durchgehende Hohlraum 18 dient zur Aufnahme eines weiteren, inneren Bauelementes 22, das im dargestellten Ausführungsbeispiel eine tragende Innensäule aus armiertem Beton ist. Die hohle Säule 12 kann hierbei bereits als Schalung beim Gießen der Innensäule 22 verwendet werden und wird hierzu über die vorgefertigte Stahlarmierung 62 gestülpt. Um die bereits fertiggestellte Säule 12 gegen Schäden oder Verschmutzungen zu schützen, wird diese vor dem Guß der Innensäule 22 mit einer Schutzfolie verkleidet, die nach dem Guß wieder abgenommen wird; die Säule 12 erscheint dann ohne weitere Nachbearbeitung in ihrem dekorativen Glanz.

Alternativ ist es auch möglich, die hohle Säule 12 als Verkleidung einer bereits gegossenen, tragenden Innensäule 22 zu verwenden. Zu diesem Zweck wird die äußere Säule 12 aus zwei Halbschalen gebildet, die auf die Innensäule 22 aufgesetzt werden. Nahtstellen und Fugen an der Außenhaut 16 lassen sich gegebenenfalls durch eine Reparatur-Spachtelmasse aus Polymethacrylat ausbessern.

Das Beispiel der Figur 4 zeigt ein weiteres Anwendungsbeispiel für eine Säule 12 gemäß der Erfindung mit einem inneren Hohlraum 18, der zur Aufnahme einer Verbindungsstange 24 als weiteres Bauelement 22 dient. Auf diese Weise ist es möglich, beispielsweise ein Geländer oder eine Balustrade 26 aufzubauen. Figur 4 zeigt eine Balustrade mit einem Sockel 28 aus Beton und einem Handlauf 30. Zur Verbindung zwischen Sockel 28 und Handlauf 30 dienen die in gleichmäßigen Abständen angebrachten Verbindungsstangen 24, die an beiden Enden jeweils ein Gewinde 32 aufweisen. Das untere Gewinde 32 wird in eine Mutter 34 eingeschraubt, die in eine entsprechende Aussparung 36 des Sockels 28 eingesetzt ist. Sodann wird die Säule 12 mit ihrem inneren Hohlraum 18 auf die Verbindungsstange 24 aufgeschoben, um anschließend den Handlauf 30 aufzusetzen. Zu dessen Befestigung dienen Muttern 38, die auf das obere Gewinde 32 der Verbindungsstangen 24 aufgeschraubt werden. Als Sitz für die Muttern 38 sind in den Handlauf 30 nach oben offene Aussparungen 40 eingearbeitet, die nach dem Aufschrauben der Muttern 38 verschlossen werden können, beispielsweise durch einen nicht dargestellten Deckel oder eine Spachtelmasse.

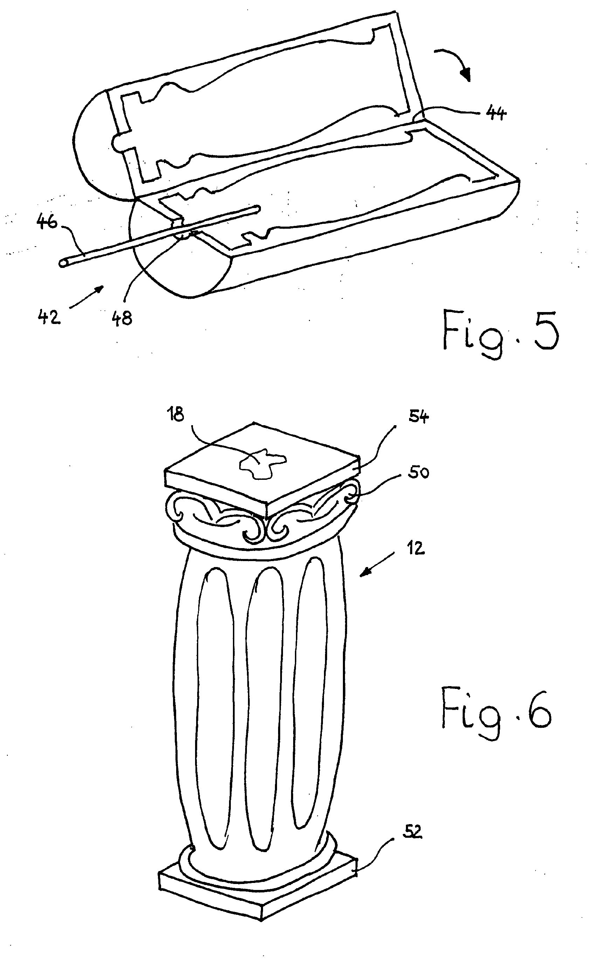

Figur 5 zeigt schematisch eine Möglichkeit zur Herstellung einer Säule 12 gemäß der Erfindung. Hierbei ist eine aus zwei Hälften bestehende Form 42 vorgesehen, wobei die beiden Formhälften über ein Scharnier 44 miteinander verbunden sind. Die beiden Hälften der Form 42 sind entsprechend der gewünschten Gestaltung der herzustellenden Säule ausgebildet. Nach dem Schließen der Form 42 in Richtung des eingezeichneten Pfeiles wird diese um ihre Mittellängsachse in Drehung versetzt, wobei zunächst flüssiges PMMA mittels einer Lanze 46 im Schleudergußverfahren eingespritzt wird. Die Lanze 46 wird dabei durch eine Öffnung 48 in einer Stirnseite der Form 42 axial verschiebbar eingeführt. Nachdem auf diese Weise der Kunststoff für die Außenhaut 16, ggf. unter Beimischung von Füllstoffen, eingespritzt ist, erfolgte das Aushärten der Außenhaut, so daß anschließend bei ebenfalls rotierender Form 42 die Ausschäumung zur Bildung des Kernes 14 durchgeführt wird; der hierfür benötigte PUR-Hartschaum wird ebenfalls über die Lanze 46 eingetragen.

Anschließend kann die Form 42 wieder geöffnet werden, um die fertige Säule 12 zu entnehmen.

Figur 6 zeigt die perspektivische Darstellung einer in dieser Weise hergestellten, zylindrischen Säule 12 mit Dekorkapitell 50 sowie quadratischem Säulensockel 52 und ebenfalls quadratischem Säulenkopf 54. Der Säulenkopf 54 läßt ferner erkennen, daß sich durch die Säule 12 in Längsrichtung ein den Hohlraum 18 bildender Lunker erstreckt.

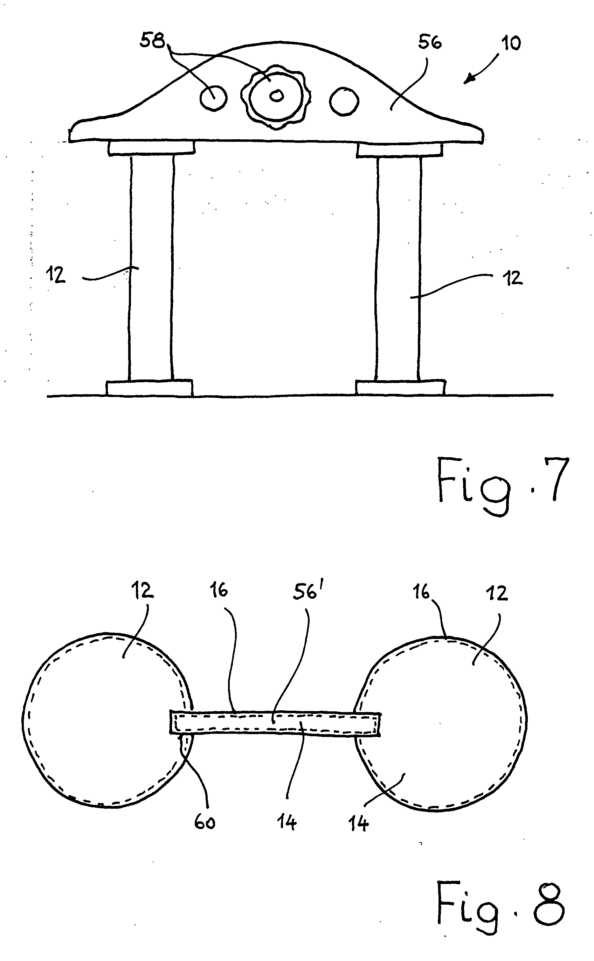

Am Beispiel der Figur 7 soll dargestellt werden, daß das Bauelement 10 gemäß der Erfindung nicht nur als Säule 12 ausgebildet sein kann, sondern auch als ein Fries 56 oder Gesims mit Zierelementen 58. Auch in diesem Fall ist das flache Bauelement 10 (Fries 56 oder dergleichen) in Sandwichbauweise aus einem PUR-Kern 14 und einer diesen umgebenden Außenhaut 16 aus PMMA hergestellt. Auch der in Figur 4 gezeigte Handlauf 30 und der Sockel 28 der Balustrade 26 können einen solchen Sandwichaufbau haben.

Die Variante der Figur 8 zeigt in Draufsicht zwei Säulen 12 gemäß der Erfindung, die durch ein ebenfalls flaches Bauelement 56' miteinander verbunden sind, das beispielsweise eine Trennwand zwischen den beiden Säulen 12 bilden kann. Dieses flache Bauelement 56' hat denselben Sandwichaufbau und ist hier zwischen zwei Einfräsungen 60 der beiden Säulen 12 eingesetzt.

Als weitere Varianten eröffnet die Erfindung die Möglichkeit, Bauelemente bis zu einer Größe von Hausfassaden und ganzen Fertighaus-Wandelementen anzufertigen. Bei letzteren können die tragenden Strukturen (Holz-Ständerbauweise, Fachwerk, Stahlrahmen) bereits fertig eingeschäumt werden. Sogar sämtliche Installationsleitungen und Durchbrüche wie Türen und Fenster lassen sich beim Herstellungsprozess bereits einbetten. Dabei ist es ebenfalls möglich, Türzargen und Fensterrahmen bereits im selben Werkstoff gemeinsam mit dem Wandelement auszuformen.

## Patentansprüche

1. Bauelement (10) mit einem Kern (14) aus Hartschaum-Kunststoff und einer diesen umgebenden Außenhaut (16) aus Polymethacrylat.

2. Bauelement nach Anspruch 1, **dadurch gekennzeichnet, daß** der Kern (14) aus Polyurethan-Hartschaum (PUR) besteht.

3. Bauelement nach Anspruch 1 oder 2, **dadurch gekennzeichnet, daß** die Außenhaut (16) aus Polymethylmethacrylat (PMMA) besteht.

4. Bauelement nach Anspruch 3, **dadurch gekennzeichnet, daß** die Außenhaut (16) faserverstärkt ist.

5. Bauelement nach Anspruch 3 oder 4, **dadurch gekennzeichnet, daß** die Außenhaut (16) Füllstoffe enthält.

6. Bauelement nach Anspruch 5, **dadurch gekennzeichnet, daß** als Füllstoffe Farbpigmente beigemischt sind.

7. Bauelement nach einem der vorhergehenden Ansprüche, **dadurch gekennzeichnet, daß** dieses als Säule (12) ausgebildet ist.

8. Bauelement nach Anspruch 7, **dadurch gekennzeichnet, daß** der Kern (14) der Säule (12) einen Hohlraum (18) zur Aufnahme eines weiteren, inneren Bauelementes (22) aufweist.

9. Bauelement nach Anspruch 8, **dadurch gekennzeichnet, daß** das weitere Bauelement (22) eine tragende Innensäule ist.

10. Bauelement nach Anspruch 9, **dadurch gekennzeichnet, daß** die Säule (12) als Schalung für die Gußherstellung der tragenden Innensäule (22) dient.

11. Bauelement nach Anspruch 8, **dadurch gekennzeichnet, daß** das weitere Bauelement (22) eine Verbindungsstange (24) ist.

12. Verfahren zur Herstellung eines Bauelementes nach Anspruch 7 oder 8, **dadurch gekennzeichnet, daß** man in eine rotierende Form (42) zunächst flüssiges PMMA zur Bildung der Außenhaut (16) einbringt und dieses aushärten läßt, worauf bei rotierender Form (42) das PUR-Gemisch eingebracht wird.

13. Verfahren nach Anspruch 12, **dadurch gekennzeichnet, daß** das flüssige PMMA mittels einer axial verschiebbaren Lanze (46) eingespritzt wird.
